# EUROPEAN PATENT SPECIFICATION

(11) **EP 3 636 337 B1**
(45) Date of publication and mention of the grant of the patent: **16.08.2023**
(21) Application number: 18200116.4
(22) Date of filing: 12.10.2018
(51) Int. Cl.: B01F 27/113, C02F 3/28

(54) **PROPELLER FOR A DIGESTION TANK MIXER**
PROPELLER FÜR EINEN FAULBEHÄLTERMISCHER
HÉLICE POUR MÉLANGEUR DE CUVE DE DIGESTION

(43) Date of publication of application: 15.04.2020
(73) Proprietor: Xylem Europe GmbH, 8200 Schaffhausen (CH)
(72) Inventor: LOMAN, Peter, 175 69 JÄRFÄLLA (SE)
(74) Representative: Brann AB

(56) References cited:
- WO-A1-2017/037156
- DE-A1-102006 053 339
- US-A- 2 524 870
- US-A- 4 721 394
- US-A1- 2017 333 853
- Anonymous: "Prospekt effektive Abwasserbehandlung", LJM Industrie, 22 February 2012 (2012-02-22), XP055512100, Retrieved from the Internet: URL:https://spildevand.ljm.dk/de/ruehren/ [retrieved on 2018-10-03]

## Description

### Technical field of the Invention

The present invention relates generally to the field of mixers for mixing liquid comprising solid matter, such as sewage, biomass slurry, etc. The present matter relates to a mixer for wastewater treatment applications. Further, the present invention relates specifically to the field of mixers for digestion tanks, i.e. biogas applications. These mixers belong to the field of submersible geared mixers, i.e. mixers having slowly rotating propellers (50-150 rpm) wherein the mixer is arranged to be partly or wholly lowered into the liquid/slurry.

The present invention relates to a propeller for such a mixer, wherein the propeller comprises a hub and at least two blades. The single blade comprises a thrust side surface, a suction side surface, an inner edge fixedly connected to the hub, an outer edge located at a distance from the hub, a leading edge extending from the inner edge to the outer edge and a trailing edge extending from the inner edge to the outer edge, wherein for each blade there is an outer geometrical plane that is parallel to a center axis of the propeller, perpendicular to a radius of the propeller and intersects both the leading edge and the trailing edge, and comprises at least one of the intersection between the outer edge and the leading edge and the intersection between the outer edge and the trailing edge, there is an inner geometrical plane that is parallel to the outer geometrical plane and that is tangent to the hub, and there is a radial distance between and perpendicular to the outer geometrical plane and the inner geometrical plane. The present invention also relates to a mixer for a digestion tank.

### Background of the Invention

Usually digestion tank mixers comprise propellers made of plastic. The viscous nature of the biomass slurry in biogas applications requires that the mixer, i.e. propeller, delivers elevated thrust in order to generate a proper mixing and generate a suitable bulk flow in the digestion tank. One straight forward way to increase the thrust is to increase the operational speed of the mixer and/or to increase the size/diameter of the propeller. Thus, it would be advantageous to have a large diameter of the propeller, however the diameter of the propeller is limited by the size of the tank opening used to introduce the mixer into the tank. Thereto, the biogas applications present an extremely abrasive environment for the propeller of the mixer, i.e. very though wear conditions, an increased operational speed will accelerate the wear of the propeller, and an increased diameter of the propeller will increase the power consumption to unacceptable levels. Already at moderate operational speed and limited diameter of the propeller, the propeller of the mixer is subject to considerable wear and needs to be exchanged at regular intervals, sometimes as often as twice or more per year.

The most common design of propeller for digestion tank mixers uses flat and long blades that are tilted approx 45 degrees and extends in a radial direction from the propeller hub, in order to meet the thrust requirements at low operational speed. WO 2017/037156 discloses a propeller for stirring a molten metal, wherein the propeller comprises a hub and a plurality of blades connected to and extending in the radial direction from the hub. According to one embodiment each blade comprises an outer geometrical plane and an inner geometrical plane, wherein each geometrical plane therebetween has an arc-shaped cross section and has a chord extending between the leading edge and the trailing edge of the blade.

### Object of the Invention

The present invention aims at obviating the aforementioned disadvantages and failings of previously known propellers, and at providing an improved propeller for digestion tank mixer. A primary object of the present invention is to provide an improved propeller of the initially defined type wherein high enough thrust is generated using a limited diameter propeller and without having elevated power consumption.

### Summary of the Invention

According to the invention at least the primary object is attained by means of the initially defined propeller having the features defined in the independent claim. Preferred embodiments of the present invention are further defined in the dependent claims.

According to the present invention, there is provided a propeller of the initially defined type, which is characterized in that at each intermediate geometrical plane located between and parallel to the outer geometrical plane and the inner geometrical plane, the blade has an arc-shaped cross section that extends between the leading edge and the trailing edge and that is concave on the thrust side, and a chord that extends between the leading edge and the trailing edge, wherein an angle between the chord and a radial plane of the propeller, is equal to or greater than 25 degrees and equal to or less than 45 degrees in each intermediate geometrical plane taken along the entire radial distance, and wherein the ratio between an arc-height (AH) between the chord and the thrust side surface and the length of the chord (C), AH:C, is equal to or greater than 0,08 and equal to or less than 0,15 in each intermediate geometrical plane taken along the entire radial distance. According to the present invention, there is also provided a mixer comprising such a propeller.

Thus, the present invention is based on the insight of the inventors that in order to compensate for decreased diameter of the propeller it is only possible to reach the required thrust levels at a low operational speed by having arc-shaped blades provided with an optimal combination of the angle of the chord and the arc-height-chord ratio along/over the entire radial extension of the blades.

According to a preferred embodiment of the present invention, the arc-height is equal to or greater than 30 millimeters and equal to or less than 70 millimeters in each intermediate geometrical plane taken along the entire radial distance. This means that the concave shape of the blades is considerable and distinct along/over the entire radial extension of the blades.

According to a preferred embodiment of the present invention, the angle between the chord and the radial plane of the propeller is equal to or greater than 29 degrees and equal to or less than 45 degrees in each intermediate geometrical plane taken along the entire radial distance. This means that the pitch of the blades is considerable and distinct along/over the entire radial extension of the blades.

According to a preferred embodiment of the present invention, the length of the chord is equal to or greater than 280 millimeters and equal to or less than 475 millimeters in each intermediate geometrical plane taken along the entire radial distance. This means that the extension of the blades in the circumferential direction is considerable and distinct along/over the entire radial extension of the blades.

Further advantages with and features of the invention will be apparent from the other dependent claims as well as from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
Fig. 1 is a side view of an inventive propeller connected to a digestion tank mixer, seen in the radial direction,
Fig. 2 is a side view of the inventive propeller seen from the thrust side, i.e. seen from above in figure 1,
Fig. 3 is a side view of the inventive propeller disclosing the cross section of the blade at the inner geometrical plane,
Fig. 4 is a side view of the propeller disclosing the cross section of the blade at the outer geometrical plane, and
Fig. 5 is a side view of the propeller disclosing the cross section of the blade at one random intermediate geometrical plane.

### Detailed description of preferred embodiments of the invention

The present invention relates generally to the field of mixers for mixing liquid comprising solid matter, such as sewage, biomass slurry, etc. Thus, in general terms a wastewater/sewage treatment mixer, and especially a digestion tank mixer or biogas mixer.

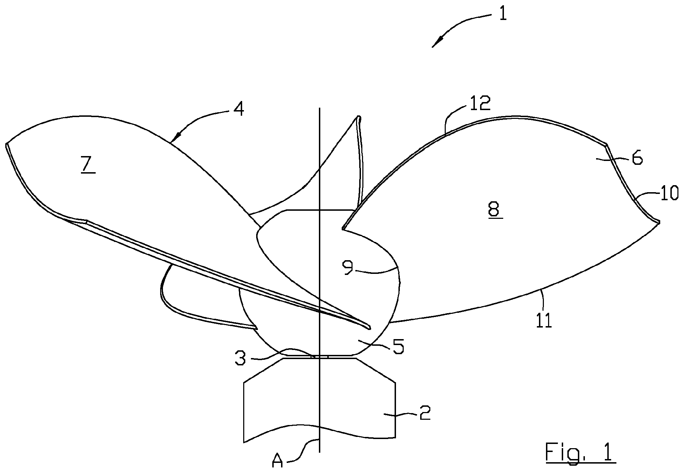

Reference is initially made to figure 1, disclosing a forward part of a mixer 1 configured to be used in a digestion tank. The components of the mixer 1 are usually cold down by means of the liquid/water surrounding the mixer 1. Thus the mixer 1 is designed and configured to be able to operate in a submerged configuration/position, i.e. during operation be located entirely under the liquid surface. However, it shall be realized that the submersible mixer 1 during operation must not be entirely located under the liquid surface but may continuously or occasionally be partly located above the liquid surface.

The mixer 1 comprises a liquid tight mixer housing/body 2 housing an electric motor and a transmission, a propeller shaft 3 extending from the transmission and a propeller, generally designated 4, detachably connected to a forward end of the propeller shaft 3. The propeller shaft 3 is also known as drive shaft. Thus, the propeller 4 is driven in rotation by the electric motor via the transmission and the propeller shaft 3. During operation of the mixer 1 the propeller 4 is slowly rotating, i.e. the operational speed of the mixer is preferably in the range 50-150 rpm. The propeller 4 and the propeller shaft 3 have a common center axis A. The electric motor is powered via an electric power cable extending from a power supply, and the mixer 1 comprises a liquid tight lead-through receiving the electric power cable.

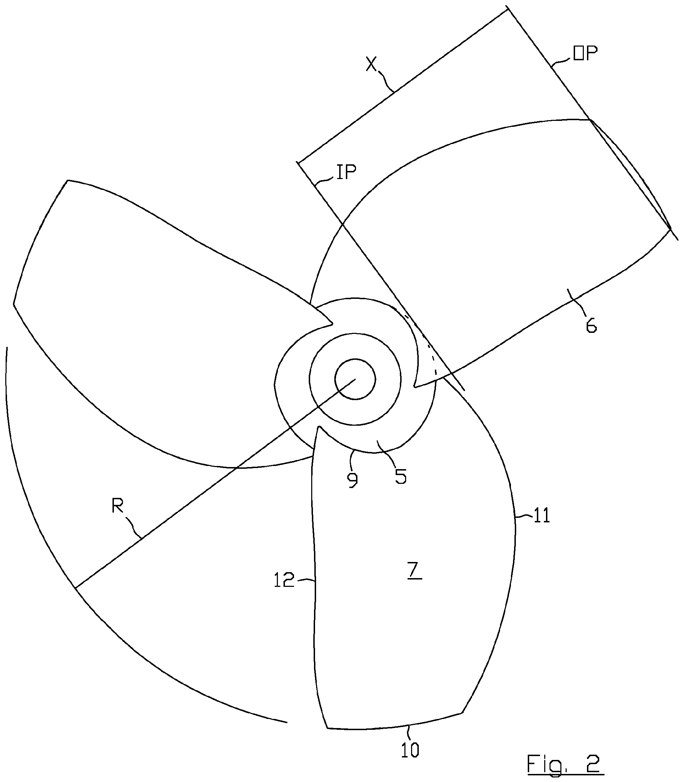

Reference is now also made to figure 2. The propeller 4 comprises a hub 5 and at least two blades 6. The hub 5 has preferably a spherical primary shape, at least in the region where the blades 6 are attached to the hub 5. The blades 6 are pre-shaped and then attached/welded to the hub 5. The propeller 4 is made of metal, preferably stainless steel, and each blade 6 is made of metal sheet, i.e. having uniform thickness over the entire extension of the blade 6. In the preferred embodiment disclosed in the figures the propeller 4 comprises three blades 6, and as disclosed in figure 2 the blades 6 preferably overlap each other in the proximal region, seen in the axial direction. The hub 5 is preferably hollow, i.e. having an outer shell and an inner structure configured to cooperate with the propeller shaft 3.

Each blade 6 comprises a thrust side surface 7 and a suction side surface 8. Thereto the blade 6 comprises an inner edge 9 fixedly connected to the hub 5 and an outer edge 10 located at a distance from the hub 5, i.e. at least a part of the outer edge 10 is located at an outer diameter/periphery of the propeller 4, a leading edge 11 extending from the inner edge 9 (hub 5) to the outer edge 10, and a trailing edge 12 extending from the inner edge 9 (hub 5) to the outer edge 10. Thus, during operation the propeller 4 will rotate in the counter clockwise direction in figure 2 and the liquid slurry will flow in the upwards direction in figure 1. The inventive shape of the propeller 4 blades 6 will redirect and accelerate the liquid slurry. Preferably the entire outer edge 10 is located at the outer diameter of the propeller 4. At least one of the intersections between the outer edge 10 and the leading edge 11 and the trailing edge 12, respectively, is located at the outer diameter/periphery of the propeller 4. Said intersections are preferably rounded. According to the disclosed embodiment the outer diameter of the propeller 4 is equal to or less than 1350 millimeters, preferably equal to or less than 1300 millimeters, and most preferably equal to or less than 1250 millimeters. Preferably, the inner edge 9 is S-shaped.

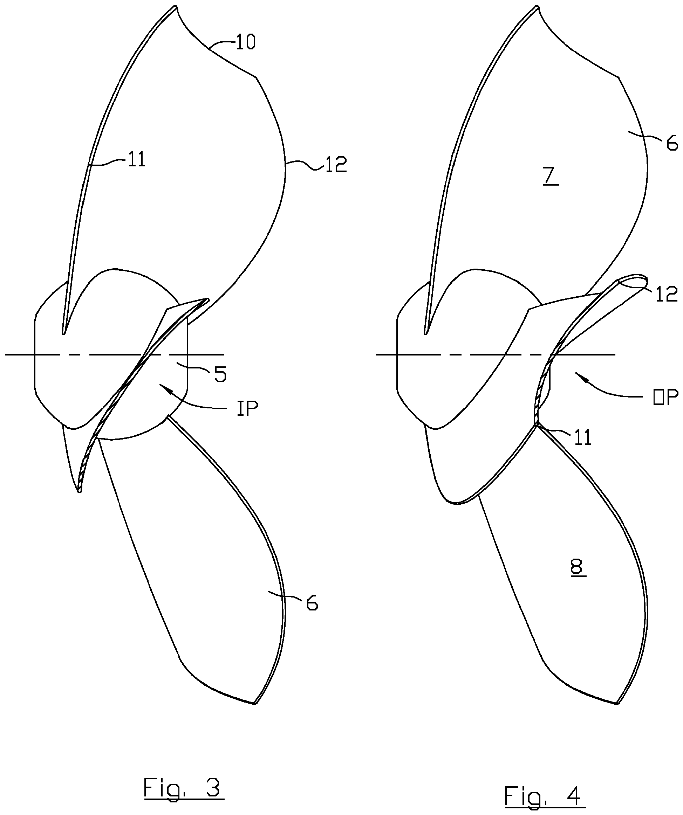

Reference is now also made to figures 3 and 4. For each blade 6 there is an outer geometrical plane OP (cross section) disclosed in figures 2 and 4, and an inner geometrical plane IP (cross section) disclosed in figures 2 and 3.

The outer geometrical plane OP is parallel to the center axis A of the propeller 4, and is perpendicular to a radius R of the propeller 4 and intersects both the leading edge 11 and the trailing edge 12 of the blade 6. The radius R of the propeller 4 originates from the center axis A of the propeller 4. Further, the outer geometrical plane OP comprises/includes at least one of the intersection between the outer edge 10 and the leading edge 11 and the intersection between the outer edge 10 and the trailing edge 12. Preferably the outer geometrical plane OP comprises/includes both intersections between the outer edge 10 and the leading edge 11 and the trailing edge 12, respectively.

The inner geometrical plane IP is parallel to the outer geometrical plane OP, and is tangent to the hub 5. There is a radial distance X between the outer geometrical plane OP and the inner geometrical plane IP, taken perpendicular to the outer geometrical plane OP and to the inner geometrical plane IP. The inner edge 9 of the blade 6 is entirely located inwards the inner geometrical plane IP seen in the radial direction, i.e. closer to the center line A of the propeller 4.

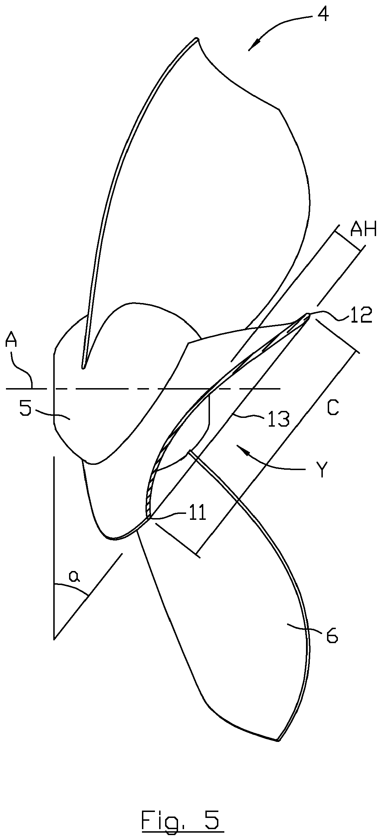

Reference is now also made to figure 5. The outer geometrical plane OP and the inner geometrical plane IP as well as each intermediate geometrical plane Y located between and parallel to the outer geometrical plane OP and the inner geometrical plane IP has an arc-shaped cross section that extends between the leading edge 11 and the trailing edge 12 and that is concave on the thrust side, and has a geometrical chord 13 that extends between the leading edge 11 and the trailing edge 12.

It is essential for the invention that an angle α between the chord 13 and a radial plane of the propeller 4 is equal to or greater than 25 degrees and equal to or less than 45 degrees in each intermediate geometrical plane Y taken along the entire radial distance X, at the same time as the ratio between an arc-height AH between the chord 13 and the thrust side surface 7 and the length of the chord C, i.e. AH:C, is equal to or greater than 0,08 and equal to or less than 0,15 in each intermediate geometrical plane Y taken along the entire radial distance X. This combination of angle α and ratio AH:C is optimal in order not to exceed the predetermined power levels and at the same time reach the required thrust levels.

It shall be pointed out that the chord 13 is provided by using a ruler or the like abutting both the trailing edge 12 and the leading edge 11. The length of the chord C is equal to the distance between the two abutment points, and the arc-height AH is the greatest distance between the chord 13, i.e. the ruler, and the thrust side surface 7, measured perpendicular to the chord 13.

According to a preferred embodiment, the ratio AH:C is equal to or greater than 0,10 in each intermediate geometrical plane Y taken along at least a continuous range of 80% of the entire radial distance X. According to a preferred embodiment, the ratio AH:C is equal to or greater than 0,12 in each intermediate geometrical plane Y taken along at least a continuous range of 60% of the entire radial distance X. Preferably, said ranges does not include the inner geometrical plane IP. Preferably, said ranges include the outer geometrical plane OP.

The arc-height AH is equal to or greater than 30 millimeters and equal to or less than 70 millimeters in each intermediate geometrical plane Y taken along the entire radial distance X. Preferably the arc-height AH is equal to or greater than 35 millimeters and equal to or less than 65 millimeters in each intermediate geometrical plane Y taken along the entire radial distance X. The resulting combination of arc-height AH and ratio AH:C is optimal in order not to exceed the predetermined power levels and at the same time reach the required thrust levels.

According to a preferred embodiment, the arc-height AH is equal to or greater than 45 millimeters and equal to or less than 70 millimeters in each intermediate geometrical plane Y taken along at least a continuous range of 70% of the entire radial distance X, wherein said range does not include at least the inner geometrical plane IP and the outer geometrical plane OP. Preferably, said range is centered between the inner geometrical plane IP and the outer geometrical plane OP.

According to a preferred embodiment, the angle α between the chord 13 and the radial plane of the propeller 4 is equal to or greater than 29 degrees and equal to or less than 45 degrees in each intermediate geometrical plane Y taken along the entire radial distance X. Preferably the angle α is equal to or less than 40 degrees in each intermediate geometrical plane Y taken along the entire radial distance X.

According to a preferred embodiment, the angle α between the chord 13 and the radial plane of the propeller 4 is equal to or greater than 35 degrees and equal to or less than 45 degrees in each intermediate geometrical plane Y taken along at least a continuous range of 70% of the entire radial distance X, wherein said range does not include at least the inner geometrical plane IP and the outer geometrical plane OP. Preferably the angle α is equal to or less than 40 degrees in each intermediate geometrical plane Y taken along at least a continuous range of 70% of the entire radial distance X, wherein said range does not include at least the inner geometrical plane IP and the outer geometrical plane OP. Preferably, said range is centered between the inner geometrical plane IP and the outer geometrical plane OP.

Preferably the angle α between the chord 13 and the radial plane of the propeller 4 is equal to or greater than 30 degrees and equal to or less than 45 degrees in each geometrical plane Y taken along at least a continuous range of 95% of the entire radial distance X, said range including the inner geometrical plane IP.

The length of the chord C is equal to or greater than 280 millimeters and equal to or less than 475 millimeters in each intermediate geometrical plane Y taken along the entire radial distance X. The resulting combination of chord length C and ratio AH:C is optimal in order not to exceed the predetermined power levels and at the same time reach the required thrust levels.

Preferably, the length of the chord C is equal to or greater than 380 millimeters and equal to or less than 475 millimeters in each intermediate geometrical plane Y taken along at least a continuous range of 70% of the entire radial distance X, wherein said range does not include at least the inner geometrical plane IP and the outer geometrical plane OP. Preferably, said range is centered between the inner geometrical plane IP and the outer geometrical plane OP.

A maximum projected distance in the axial direction of the propeller 4 between two points on the leading edge 11 is equal to or greater than 180 millimeters, preferably equal to or greater than 190 millimeters. Thereto, said distance is less than 210 millimeters. A maximum projected distance in the axial direction of the propeller 4 between two points on the trailing edge 12 is equal to or greater than 190 millimeters, preferably equal to or greater than 200 millimeters. Thereto, said distance is less than 220 millimeters. The maximum projected distance in the axial direction of the propeller is equal to a vertical distance measured in a side view according to figure 1.

A distance in the axial direction of the propeller 4 between a radial plane comprising the intersection between the inner edge 9 and the trailing edge 12 and a radial plane comprising the intersection between the outer edge 10 and the trailing edge 12 is greater than 145 millimeters, preferably greater than 150 millimeters. Thereto, said distance is less than 160 millimeters. The distance in the axial direction of the propeller is equal to a vertical distance measured in a side view according to figure 1.

The blades 6 of the propeller 4 are at least partly double curved, i.e. having positions wherein the propeller 6 is curved along two mutually intersecting directions, as can be seen in figure 4.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the appended claims. Thus, the equipment may be modified in all kinds of ways within the scope of the appended claims.

It shall also be pointed out that all information about/concerning terms such as above, under, upper, lower, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. A propeller for a digestion tank mixer, wherein the propeller (4) comprises a hub (5) and at least two blades (6), wherein each blade (6) comprises:
- a thrust side surface (7) and a suction side surface (8),
- an inner edge (9) fixedly connected to the hub (5) and an outer edge (10) located at a distance from the hub (5), and
- a leading edge (11) extending from the inner edge (9) to the outer edge (10), and a trailing edge (12) extending from the inner edge (9) to the outer edge (10),
wherein for each blade (6) there is an outer geometrical plane (OP) that is parallel to a center axis (A) of the propeller (4), perpendicular to a radius of the propeller (4) and intersects both the leading edge (11) and the trailing edge (12), and comprises at least one of the intersection between the outer edge (10) and the leading edge (11) and the intersection between the outer edge (10) and the trailing edge (12), there is an inner geometrical plane (IP) that is parallel to the outer geometrical plane (OP) and that is tangent to the hub (5), and there is a radial distance (X) between and perpendicular to the outer geometrical plane (OP) and the inner geometrical plane (IP),
wherein at each intermediate geometrical plane (Y) located between and parallel to the outer geometrical plane (OP) and the inner geometrical plane (IP), the blade (6) has:
- an arc-shaped cross section that extends between the leading edge (11) and the trailing edge (12) and that is concave on the thrust side, and
- a chord (13) that extends between the leading edge (11) and the trailing edge (12), **characterized in that** an angle (α) between the chord (13) and a radial plane of the propeller (4), is equal to or greater than 25 degrees and equal to or less than 45 degrees in each intermediate geometrical plane (Y) taken along the entire radial distance (X), and
that the ratio between an arc-height [AH] between the chord (13) and the thrust side surface (7) and the length of the chord [C], AH:C, is equal to or greater than 0,08 and equal to or less than 0,15 in each intermediate geometrical plane (Y) taken along the entire radial distance (X).

2. The propeller (4) according to claim 1, wherein the arc-height (AH) is equal to or greater than 30 millimeters and equal to or less than 70 millimeters in each intermediate geometrical plane (Y) taken along the entire radial distance (X).

3. The propeller (4) according to claim 1 or 2, wherein the arc-height (AH) is equal to or greater than 45 millimeters and equal to or less than 70 millimeters in each intermediate geometrical plane (Y) taken along at least a continuous range of 70% of the entire radial distance (X), said range excluding at least the inner geometrical plane (IP) and the outer geometrical plane (OP).

4. The propeller (4) according to any of claims 1-3, wherein the angle (α) between the chord (13) and the radial plane of the propeller (4) is equal to or greater than 29 degrees and equal to or less than 45 degrees in each intermediate geometrical plane (Y) taken along the entire radial distance (X).

5. The propeller (4) according to any of claims 1-4, wherein the angle (α) between the chord (13) and the radial plane of the propeller (4) is equal to or greater than 35 degrees and equal to or less than 45 degrees in each intermediate geometrical plane (Y) taken along at least a continuous range of 70% of the entire radial distance (X), said range excluding at least the inner geometrical plane (IP) and the outer geometrical plane (OP).

6. The propeller (4) according to any of claims 1-4, wherein the angle (α) between the chord (13) and the radial plane of the propeller (4) is equal to or greater than 30 degrees and equal to or less than 45 degrees in each geometrical plane (Y) taken along at least a continuous range of 95% of the entire radial distance (X), said range including the inner geometrical plane (IP).

7. The propeller (4) according to any preceding claim, wherein the length of the chord [C] is equal to or greater than 280 millimeters and equal to or less than 475 millimeters in each intermediate geometrical plane (Y) taken along the entire radial distance (X).

8. The propeller (4) according to any preceding claim, wherein the length of the chord [C] is equal to or greater than 380 millimeters and equal to or less than 475 millimeters in each intermediate geometrical plane (Y) taken along at least a continuous range of 70% of the entire radial distance (X), said range excluding at least the inner geometrical plane (IP) and the outer geometrical plane (OP).

9. The propeller (4) according to any preceding claim, wherein a maximum projected distance in the axial direction of the propeller (4) between two points on the leading edge (11) is equal to or greater than 180 millimeters.

10. The propeller (4) according to any preceding claim, wherein a maximum projected distance in the axial direction of the propeller (4) between two points on the trailing edge (12) is equal to or greater than 190 millimeters.

11. The propeller (4) according to any preceding claim, wherein a distance in the axial direction of the propeller (4) between a radial plane comprising the intersection between the inner edge (9) and the trailing edge (12) and a radial plane comprising the intersection between the outer edge (10) and the trailing edge (12) is greater than 145 millimeters.

12. The propeller (4) according to any preceding claim, wherein the blades (6) and the hub (5) are made of metal, preferably stainless steel.

13. The propeller (4) according to claim 1, wherein the outer diameter of the propeller (4) is equal to or less than 1350 millimeters.

14. A mixer (1) for a digestion tank, having a mixer body (2) and a propeller shaft (3), **characterized in that** the mixer (1) comprises a propeller (4) according to any of claims 1-13 connected to said propeller shaft (3).

## Patentansprüche

1. Propeller für einen Faulbehältermischer, wobei der Propeller (4) eine Nabe (5) und wenigstens zwei Schaufeln (6) umfasst, wobei jede Schaufel (6) umfasst:
- eine schubseitige Oberfläche (7) und eine saugseitige Oberfläche (8),
- eine Innenkante (9), die mit der Nabe (5) fest verbunden ist, und eine Außenkante (10), die sich in einem Abstand von der Nabe (5) befindet, und
- eine Vorderkante (11), die sich von der Innenkante (9) zur Außenkante (10) erstreckt, und eine Hinterkante (12), die sich von der Innenkante (9) zur Außenkante (10) erstreckt,
wobei es für jede Schaufel (6) eine äußere geometrische Ebene (OP) gibt, die parallel zu einer Mittelachse (A) des Propellers (4), rechtwinklig zu einem Radius des Propellers (4) verläuft und sowohl die Vorderkante (11) als auch die Hinterkante (12) schneidet, und die wenigstens den Schnittpunkt zwischen der Außenkante (10) und der Vorderkante (11) oder den Schnittpunkt zwischen der Außenkante (10) und der Hinterkante (12) umfasst, wobei es eine innere geometrische Ebene (IP) gibt, die parallel zur äußeren geometrischen Ebene (OP) und tangential zur Nabe (5) verläuft, und es einen radialen Abstand (X) zwischen und rechtwinklig zu der äußeren geometrischen Ebene (OP) und der inneren geometrischen Ebene (IP) gibt,
wobei an jeder geometrischen Zwischenebene (Y), die sich zwischen und parallel zu der äußeren geometrischen Ebene (OP) und der inneren geometrischen Ebene (IP) befindet, die Schaufel (6) aufweist:
- einen bogenförmigen Querschnitt, der sich zwischen der Vorderkante (11) und der Hinterkante (12) erstreckt und der auf der Schubseite konkav ist, und
- eine Sehne (13), die sich zwischen der Vorderkante (11) und der Hinterkante (12) erstreckt,
**dadurch gekennzeichnet, dass** ein Winkel (α) zwischen der Sehne (13) und einer radialen Ebene des Propellers (4) gleich oder größer als 25 Grad und gleich oder kleiner ist als 45 Grad in jeder geometrischen Zwischenebene (Y), die entlang der gesamten radialen Entfernung (X) genommen wird, und
dass das Verhältnis zwischen einer Bogenhöhe [AH] zwischen der Sehne (13) und der schubseitigen Oberfläche (7) und der Länge der Sehne [C] AH:C gleich oder größer als 0,08 und gleich oder kleiner ist als 0,15 in jeder geometrischen Zwischenebene (Y), die entlang der gesamten radialen Entfernung (X) genommen wird.

2. Propeller (4) nach Anspruch 1, wobei die Bogenhöhe (AH) gleich oder größer als 30 Millimeter und gleich oder kleiner ist als 70 Millimeter in jeder geometrischen Zwischenebene (Y), die entlang der gesamten radialen Entfernung (X) genommen wird.

3. Propeller (4) nach Anspruch 1 oder 2, wobei die Bogenhöhe (AH) gleich oder größer als 45 Millimeter und gleich oder kleiner ist als 70 Millimeter in jeder geometrischen Zwischenebene (Y), die entlang von wenigstens einem kontinuierlichen Bereich von 70 % der gesamten radialen Entfernung (X) genommen wird, wobei dieser Bereich wenigstens die innere geometrische Ebene (IP) und die äußere geometrische Ebene (OP) ausschließt.

4. Propeller (4) nach einem der Ansprüche 1 - 3, wobei der Winkel (α) zwischen der Sehne (13) und der radialen Ebene des Propellers (4) gleich oder größer als 29 Grad und gleich oder kleiner ist als 45 Grad in jeder geometrischen Zwischenebene (Y), die entlang der gesamten radialen Entfernung (X) genommen wird.

5. Propeller (4) nach einem der Ansprüche 1 - 4, wobei der Winkel (α) zwischen der Sehne (13) und der radialen Ebene des Propellers (4) gleich oder größer als 35 Grad und gleich oder kleiner ist als 45 Grad in jeder geometrischen Zwischenebene (Y), die entlang von wenigstens einem kontinuierlichen Bereich von 70 % der gesamten radialen Entfernung (X) genommen wird, wobei dieser Bereich wenigstens die innere geometrische Ebene (IP) und die äußere geometrische Ebene (OP) ausschließt.

6. Propeller (4) nach einem der Ansprüche 1 - 4, wobei der Winkel (α) zwischen der Sehne (13) und der radialen Ebene des Propellers (4) gleich oder größer als 30 Grad und gleich oder kleiner ist als 45 Grad in jeder geometrischen Ebene (Y), die entlang von wenigstens einem kontinuierlichen Bereich von 95 % der gesamten radialen Entfernung (X) genommen wird, wobei der Bereich die innere geometrische Ebene (IP) einschließt.

7. Propeller (4) nach einem der vorhergehenden Ansprüche, wobei die Länge der Sehne [C] gleich oder größer als 280 mm und gleich oder kleiner ist als 475 mm in jeder geometrischen Zwischenebene (Y), die entlang der gesamten radialen Entfernung (X) genommen wird.

8. Propeller (4) nach einem der vorhergehenden Ansprüche, wobei die Länge der Sehne [C] gleich oder größer als 380 mm und gleich oder kleiner ist als 475 mm in jeder geometrischen Zwischenebene (Y), die entlang von wenigstens einem kontinuierlichen Bereich von 70 % der gesamten radialen Entfernung (X) genommen wird, wobei dieser Bereich wenigstens die innere geometrische Ebene (IP) und die äußere geometrische Ebene (OP) ausschließt.

9. Propeller (4) nach einem der vorhergehenden Ansprüche, wobei eine maximale projizierte Entfernung in der axialen Richtung des Propellers (4) zwischen zwei Punkten an der Vorderkante (11) gleich oder größer ist als 180 Millimeter.

10. Propeller (4) nach einem der vorhergehenden Ansprüche, wobei eine maximale projizierte Entfernung in der axialen Richtung des Propellers (4) zwischen zwei Punkten an der Hinterkante (12) gleich oder größer ist als 190 Millimeter.

11. Propeller (4) nach einem der vorhergehenden Ansprüche, wobei eine Entfernung in der axialen Richtung des Propellers (4) zwischen einer radialen Ebene, die den Schnittpunkt zwischen der Innenkante (9) und der Hinterkante (12) umfasst, und einer radialen Ebene, die den Schnittpunkt zwischen der Außenkante (10) und der Hinterkante (12) umfasst, größer ist als 145 Millimeter.

12. Propeller (4) nach einem der vorhergehenden Ansprüche, wobei die Schaufeln (6) und die Nabe (5) aus Metall, vorzugsweise aus rostfreiem Stahl bestehen.

13. Propeller (4) nach Anspruch 1, wobei der Außendurchmesser des Propellers (4) gleich oder kleiner ist als 1350 Millimeter.

14. Mischer (1) für einen Faulbehälter mit einem Mischerkörper (2) und einer Propellerwelle (3), **dadurch gekennzeichnet, dass** der Mischer (1) einen Propeller (4) nach einem der Ansprüche 1 - 13 umfasst, der mit der Propellerwelle (3) verbunden ist.

## Revendications

1. Hélice pour un mélangeur de cuve de digestion, dans laquelle l'hélice (4) comprend un moyeu (5) et au moins deux pales (6), dans laquelle chaque pale (6) comprend :
- une surface côté poussée (7) et une surface côté aspiration (8),
- un bord interne (9) fixement relié au moyeu (5) et un bord externe (10) situé à une distance du moyeu (5), et
- un bord d'attaque (11) s'étendant du bord interne (9) au bord externe (10), et un bord de fuite (12) s'étendant du bord interne (9) au bord externe (10),
dans laquelle pour chaque pale (6) existe un plan géométrique externe (OP) qui est parallèle à un axe central (A) de l'hélice (4), perpendiculaire à un rayon de l'hélice (4) et qui croise à la fois le bord d'attaque (11) et le bord de fuite (12), et comprend au moins l'une de l'intersection entre le bord externe (10) et le bord d'attaque (11) et de l'intersection entre le bord externe (10) et le bord de fuite (12), il existe un plan géométrique interne (IP) qui est parallèle au plan géométrique externe (OP) et qui est tangent au moyeu (5), et il existe une distance radiale (X) entre le plan géométrique externe (OP) et le plan géométrique interne (IP) et perpendiculaire à ces derniers,
dans laquelle au niveau de chaque plan géométrique intermédiaire (Y) situé entre le plan géométrique externe (OP) et le plan géométrique interne (IP) et perpendiculaire à ces derniers, la pale (6) présente :
- une section transversale en forme d'arc qui s'étend entre le bord d'attaque(11) et le bord de fuite (12) et qui est concave sur le côté poussée, et
- une corde (13) qui s'étend entre le bord d'attaque (11) et le bord de fuite (12),
**caractérisée en ce qu'**un angle (α) entre la corde (13) et un plan radial de l'hélice (4), est égal ou supérieur à 25 degrés et égal ou inférieur à 45 degrés dans chaque plan géométrique intermédiaire (Y) pris le long de toute la distance radiale (X), et
**en ce que** le ratio entre une hauteur d'arc [AH] entre la corde (13) et la surface côté poussée (7) et la longueur de la corde [C], AH:C, est égal ou supérieur à 0,08 et égal ou inférieur à 0,15 dans chaque plan géométrique intermédiaire (Y) pris le long de toute la distance radiale (X).

2. Hélice (4) selon la revendication 1, dans laquelle la hauteur d'arc (AH) est égale ou supérieure à 30 millimètres et égale ou inférieure à 70 millimètres dans chaque plan géométrique intermédiaire (Y) pris le long de toute la distance radiale (X).

3. Hélice (4) selon la revendication 1 ou 2, dans laquelle la hauteur d'arc (AH) est égale ou supérieure à 45 millimètres et égale ou inférieure à 70 millimètres dans chaque plan géométrique intermédiaire (Y) pris le long d'au moins une plage continue de 70 % de toute la distance radiale (X), ladite plage excluant au moins le plan géométrique interne (IP) et le plan géométrique externe (OP).

4. Hélice (4) selon l'une quelconque des revendications 1-3, dans laquelle l'angle (α) entre la corde (13) et le plan radial de l'hélice (4) est égal ou supérieur à 29 degrés et égal ou inférieur à 45 degrés dans chaque plan géométrique intermédiaire (Y) pris le long de toute la distance radiale (X).

5. Hélice (4) selon l'une quelconque des revendications 1-4, dans laquelle l'angle (α) entre la corde (13) et le plan radial de l'hélice (4) est égal ou supérieur à 35 degrés et égal ou inférieur à 45 degrés dans chaque plan géométrique intermédiaire (Y) pris le long d'au moins une plage continue de 70 % de toute la distance radiale (X), ladite plage excluant au moins le plan géométrique interne (IP) et le plan géométrique externe (OP).

6. Hélice (4) selon l'une quelconque des revendications 1-4, dans laquelle l'angle (α) entre la corde (13) et le plan radial de l'hélice (4) est égal ou supérieur à 30 degrés et égal ou inférieur à 45 degrés dans chaque plan géométrique (Y) pris le long d'au moins une plage continue de 95 % de toute la distance radiale (X), ladite plage comportant le plan géométrique interne (IP).

7. Hélice (4) selon une quelconque revendication précédente, dans laquelle la longueur de la corde [C] est égale ou supérieure à 280 millimètres et égale ou inférieure à 475 millimètres dans chaque plan géométrique intermédiaire (Y) pris le long de toute la distance radiale (X).

8. Hélice (4) selon une quelconque revendication précédente, dans laquelle la longueur de la corde [C] est égale ou supérieure à 380 millimètres et égale ou inférieure à 475 millimètres dans chaque plan géométrique intermédiaire (Y) pris le long d'au moins une plage continue de 70 % de toute la distance radiale (X), ladite plage excluant au moins le plan géométrique interne (IP) et le plan géométrique externe (OP).

9. Hélice (4) selon une quelconque revendication précédente, dans laquelle une distance projetée maximale dans la direction axiale de l'hélice (4) entre deux points sur le bord d'attaque (11) est égale ou supérieure à 180 millimètres.

10. Hélice (4) selon une quelconque revendication précédente, dans laquelle une distance projetée maximale dans la direction axiale de l'hélice (4) entre deux points sur le bord de fuite (12) est égale ou supérieure à 190 millimètres.

11. Hélice (4) selon une quelconque revendication précédente, dans laquelle une distance dans la direction axiale de l'hélice (4) entre un plan radial comprenant l'intersection entre le bord interne (9) et le bord de fuite (12) et un plan radial comprenant l'intersection entre le bord externe (10) et le bord de fuite (12) est supérieure à 145 millimètres.

12. Hélice (4) selon une quelconque revendication précédente, dans laquelle les pales (6) et le moyeu (5) sont composés de métal, de préférence d'acier inoxydable.

13. Hélice (4) selon la revendication 1, dans laquelle le diamètre externe de l'hélice (4) est égal ou inférieur à 1350 millimètres.

14. Mélangeur (1) pour une cuve de digestion, présentant un corps de mélangeur (2) et un arbre porte-hélice (3), **caractérisé en ce que** le mélangeur (1) comprend une hélice (4) selon l'une quelconque des revendications 1-13 raccordée audit arbre porte-hélice (3).
